# NEUE EUROPÄISCHE PATENTSCHRIFT

(11) **EP 1 247 672 B2**
(45) Veröffentlichungstag und Bekanntmachung des Hinweises auf die Entscheidung über den Einspruch: **30.06.2010**
(45) Hinweis auf die Patenterteilung: 22.09.2004
(21) Anmeldenummer: 02006636.1
(22) Anmeldetag: 25.03.2002
(51) Int. Cl.: B60J 7/02, B60J 7/08

(54) **Dachmodul für ein Fahrzeug**
Roof unit for vehicle
Module de toit pour véhicule

(30) Priorität: 03.04.2001 DE 10116456
(43) Veröffentlichungstag der Anmeldung: 09.10.2002
(73) Patentinhaber: ArvinMeritor GmbH, 63128 Dietzenbach (DE)
(72) Erfinder: Niebuhr, Frank, 38518 Gifhorn (DE); Röder, Joachim, 63165 Mühlheim (DE); Lutz, Markus, 38518 Gifhorn (DE); Röhnke, Manfred, 63322 Rödermark (DE)
(74) Vertreter: Prinz & Partner

(56) Entgegenhaltungen:
- EP-A- 0 447 640
- EP-A- 0 995 667
- EP-A- 1 132 240
- EP-A2- 1 138 536
- DE-A- 4 444 539
- DE-A- 19 810 839
- DE-A1- 2 929 689
- DE-A1- 3 202 594
- DE-A1- 3 429 880
- DE-C- 4 344 604
- DE-C2- 4 024 837
- DE-U1- 29 623 310
- US-A- 4 289 349

## Beschreibung

Die Erfindung betrifft ein Dachmodul, das dafür vorgesehen ist, auf eine Rohbau-Karosserie eines Fahrzeugs aufgesetzt und mit dieser verbunden zu werden, mit einem Randabschnitt, der das Dachmodul zu einer Öffnung für beispielsweise einen Schiebedach-Deckel hin abgrenzt. Das Dachmodul kann auch für Oberfirst-Schiebedächer oder Faltdächer verwendet werden. Ein Dachmodul dieser Art ist in EP-A-0 995 667 offenbart.

Um zu verhindern, daß bei geöffnetem Schiebedach Wasser, welches sich auf dem Dachmodul befindet, in den Innenraum des Fahrzeugs hineintropft, ist mindestens eine Wasserrinne am Rand der Öffnung erforderlich. Diese wird üblicherweise als Teil einer Führung des Schiebedachs ausgebildet, die als separate Baugruppe an dem Dachmodul angebracht werden muß.

Aus der EP-A-0 447 640 ist eine Rahmenspoileranordnung bekannt, die auf die Außenseite eines Fahrzeugdachs aufgesetzt werden kann und an die ein Wasserlauf angeformt ist.

Aus der EP-A-0 995 667 ist ein Verbundbauteil für Fahrzeugkarosserien bekannt, insbesondere ein Fahrzeugdach. Das Verbundbauteil besteht aus einer Außenhaut und eine innen aufgeschäumten Kunststoffschicht und kann mit einem Führungsprofil für einen Deckel eines Schiebedachs versehen sein.

Die Aufgabe der Erfindung besteht darin, ein kostengünstigeres Dachmodul zu schaffen.

Zu diesem Zweck ist erfindungsgemäß ein Dachmodul mit den Merkmalen des kennzeichnenden Teils des Anspruchs 1 vorgesehen. Da die Wasserrinne nunmehr fester Bestandteil des Dachmoduls ist, ergibt sich eine Reduzierung der erforderlichen Bauteile. Hinzu kommen reduzierte Werkzeugkosten und Teilepreise.

Das Dachmodul kann eine tiefgezogene Außenhaut aus Metall oder eine geformte Außenhaut aus Kunststoff mit einstückig ausgebildeter Wasserrinne aufweisen, was zu besonders geringen Herstellkosten führt.

Gemäß einer bevorzugten Ausführungsform der Erfindung ist weiterhin vorgesehen, daß das Dachmodul einen einstückig mit dem Dachmodul ausgebildeten Spoiler aufweist, der an die Wasserrinne angrenzt. Dieser Spoiler ist bei einer Vielzahl von Schiebedächern erforderlich, um die Windgeräusche und die Strömungsverhältnisse bei geöffnetem Schiebedach in der gewünschten Weise beeinflussen zu können. Wenn dieser Spoiler nun einstückig mit dem Dachmodul ausgebildet ist, ergibt sich eine weitere Verringerung der Teilezahl.

Vorteilhafte Ausgestaltungen der Erfindung ergeben sich aus den Unteransprüchen.

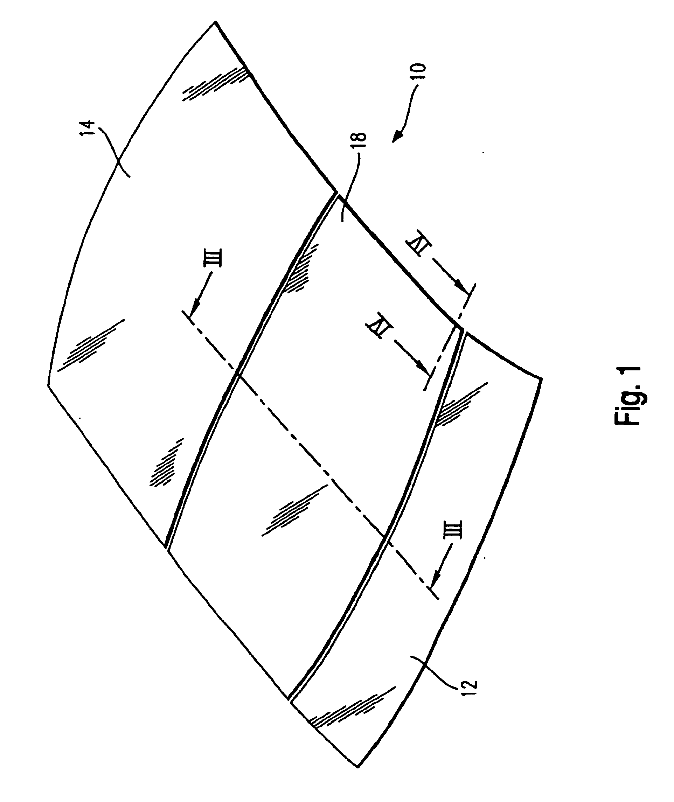

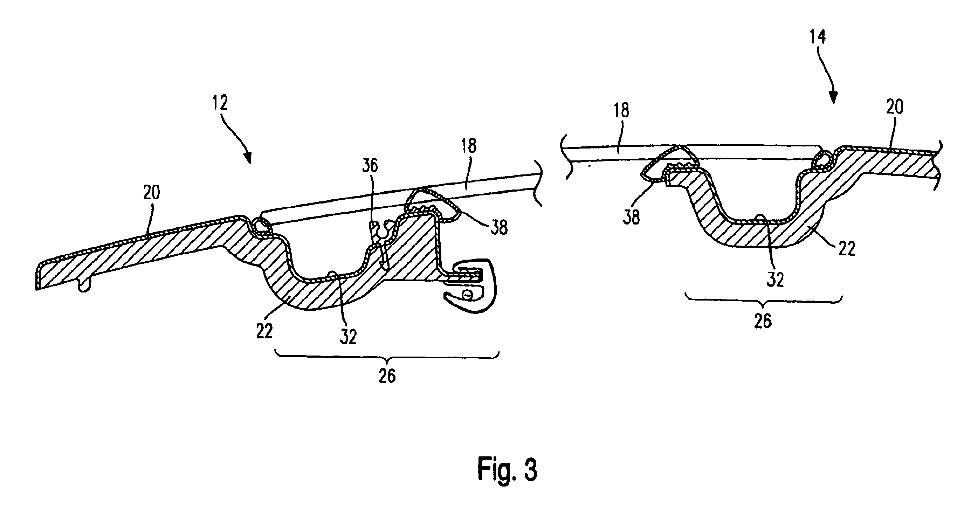

Die Erfindung wird nachfolgend anhand einer bevorzugten Ausführungsform beschrieben, die in den beigefügten Zeichnungen beispielhaft dargestellt ist. In diesen zeigen die Figuren:
1. eine schematische, perspektivische Draufsicht auf ein Dachmodul gemäß einer ersten Ausführungsform mit daran angebrachtem Schiebedach-Deckel;
2. eine Draufsicht auf das Dachmodul von Figur 1 ohne den Schiebedach-Deckel;
3. einen Schnitt entlang der Ebene III-III von Figur 1;
4. einen Schnitt entlang der Ebene IV-IV von Figur 1;
5. in einer Ansicht entsprechend Figur 3 eine Variante der ersten Ausführungsform; und

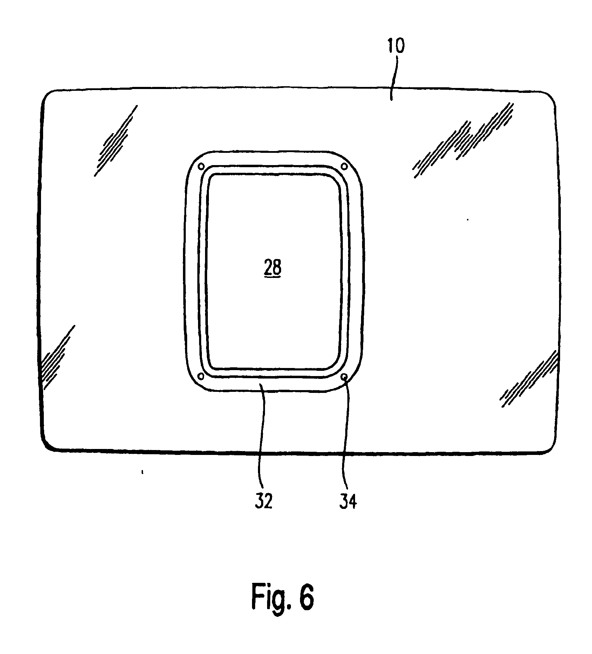

- Figur 6 eine Draufsicht auf ein Dachmodul gemäß einer zweiten Ausführungsform ohne Schiebedach-Deckel.

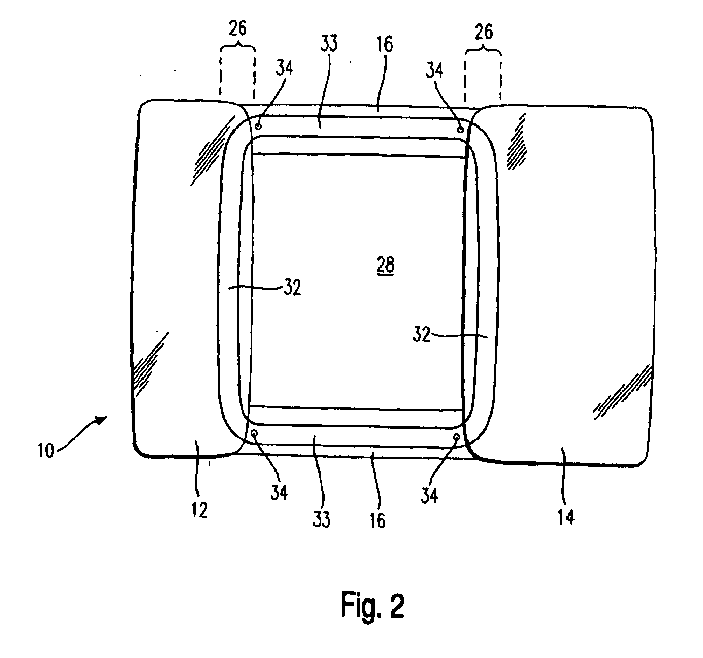

In Figur 1 ist schematisch ein Dachmodul 10 gemäß einer ersten Ausführungsform für ein Fahrzeug zu sehen, das aus den folgenden Elementen besteht: einem vorderen Modulteil 12, einem hinteren Modulteil 14, zwei sich zwischen dem vorderen und dem hinteren Modulteil erstreckenden Streben 16 (siehe Figur 2) und einem Schiebedach-Deckel 18. Der Deckel dient dazu, eine zwischen dem vorderen Modulteil 12 und dem hinteren Modulteil 14 gebildete Öffnung 28 zu verschließen oder freizugeben. In der in Figur 1 gezeigten Stellung ist die Öffnung geschlossen. Um die Öffnung freizugeben, kann der Deckel nach hinten verschoben werden, so daß er auf dem hinteren Modulteil 14 liegt. Obwohl hier beispielhaft eine Ausführungsform eines Schiebedachs mit Deckel beschrieben ist, kann die Erfindung auch bei Oberfirst-Schiebedächern oder Faltdächern angewendet werden. Unter Oberfirst-Schiebedach versteht man ein Schiebedach, welches im geöffneten Zustand auf der Dachhaut aufliegt.

Das Dachmodul weist eine Außenhaut 20 (siehe Figur 3) auf, die aus Kunststoff oder Metall bestehen kann. Die Außenhaut ist teilweise mit einer Verstärkungsschicht 22 geeignet hinterschäumt.

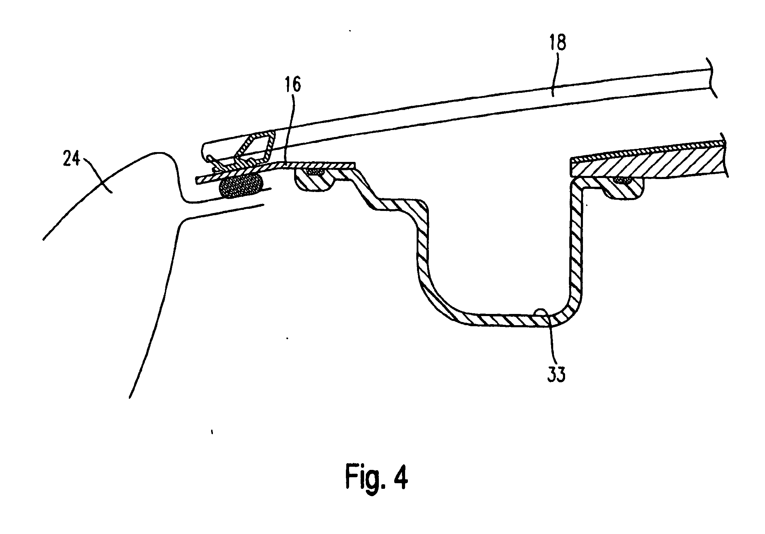

Das Dachmodul ist dafür vorgesehen, auf eine Rohbau-Karosserie eines Fahrzeugs aufgesetzt und mit dieser verbunden zu werden. Dies ist in Figur 4 angedeutet; die Strebe 16 ist mit einem angedeuteten Fahrzeug-Dachholm 24 verklebt.

In den Figuren 2 und 3 ist zu sehen, daß die beiden Modulteile 12, 14 jeweils einen Randabschnitt 26 aufweisen, der das Modulteil zur Öffnung für den Deckel hin abgrenzt. Im Randabschnitt 26 ist die Außenhaut 20 so verformt, beispielsweise durch Tiefziehen, daß in den Modulteilen 12, 14 jeweils eine Wasserrinne 32 gebildet ist. Die Wasserrinnen sind im Bereich der seitlichen Außenränder der Modulteile zur Öffnung 28 hin gekrümmt ausgeführt, so daß sie in einen Wasserkanal 33 übergehen, der an den Streben 16 angebracht ist (siehe Figur 4). Der Wasserkanal 33 ist ein Formteil aus Kunststoff und mit der Strebe 16 verklebt. Am Übergang zu den Modulteilen 12, 14 und zur Wasserrinne 32 wird eine geeignete Dichtmasse verwendet. Im Wasserkanal 33 sind Abflußöffnungen 34 (siehe Figur 2) für die Ableitung des gesammelten Wassers vorgesehen.

Am Randabschnitt 26 des vorderen Modulteils 12 ist angrenzend an die Wasserrinne 32 und unterhalb des Deckels 18 ein Lagerteil 36 angebracht, das zur Aufnahme eines bewegbaren Windabweisers dienen kann. Das Lagerteil ist bei dem hier dargestellten Ausführungsbeispiel mit einem Verankerungsfortsatz durch die Außenhaut 20 hindurchgesteckt und in die Verstärkungsschicht 22 eingeschäumt.

Das Dachmodul kann zusätzlich mit geeigneten Dichtungen 38 und weiteren Bauteilen beispielsweise für die Führung des Deckels versehen sein, die in der Wasserrinne 32 angebracht sind, aber zum Verständnis der Erfindung nicht wichtig sind und daher nicht näher beschrieben werden.

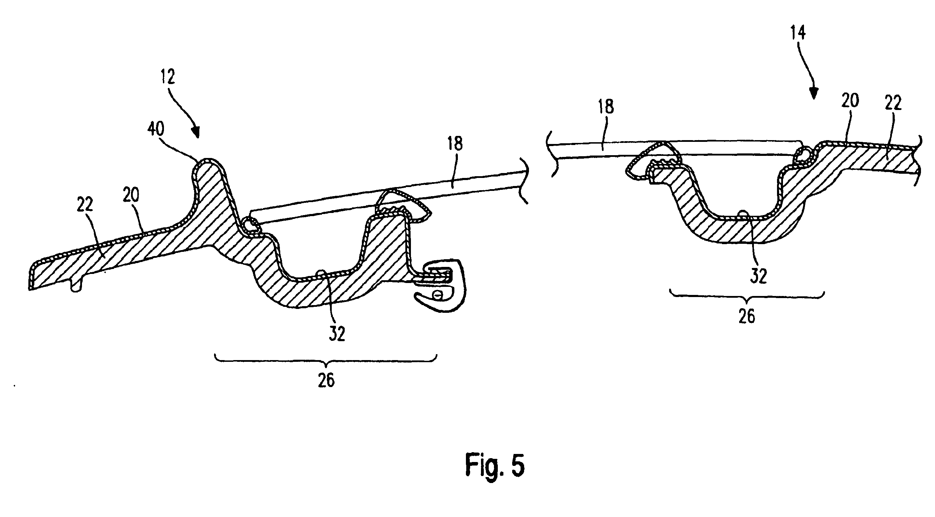

In Figur 5 ist eine Variante gezeigt, die sich von der in den Figuren 1 bis 4 gezeigten Ausführungsform dadurch unterscheidet, daß am vorderen Modulteil vor der Wasserrinne ein Spoiler 40 vorgesehen ist, der einstückig mit dem Modulteil 12 ausgebildet ist. Zu diesem Zweck ist die Außenhaut 20 geeignet geformt, beispielsweise durch Tiefziehen, und anschließend hinterschäumt. Da der Spoiler einstückig mit dem Dachmodul ausgebildet ist, ergibt sich eine weitere Verringerung der Teileanzahl.

In Figur 6 ist ein Dachmodul 10 gemäß einer zweiten Ausführungsform gezeigt, bei dem die Öffnung 28 nicht zwischen zwei Modulteilen gebildet ist, die durch Streben miteinander verbunden sind, sondern unmittelbar in dem Dachmodul vorgesehen ist. Die Wasserrinne 32 ist hier umlaufend und einstückig mit dem Dachmodul ausgebildet. Der Querschnitt dieser Wasserrinne ist vergleichbar mit dem Querschnitt der Wasserrinne, der in Figur 3 gezeigt ist. Die Abflußöffnungen 34 für das in der Wasserrinne gesammelte Wasser sind unmittelbar in der Wasserrinne vorgesehen. Vorzugsweise wird an diesen Stellen unter die Außenhaut ein Stutzen in die Verkleidung eingeschäumt, auf den ein Ablaufschlauch aufgesteckt werden kann.

## Patentansprüche

1. Dachmodul (10), das dafür vorgesehen ist, auf eine Rohbau-Karosserie eines Fahrzeugs aufgesetzt und mit dieser verbunden zu werden, mit einem Randabschnitt (26), der das Dachmodul zu einer Öffnung für beispielsweise einen Schiebedach-Deckel (18) hin abgrenzt, **dadurch gekennzeichnet, daß** der Randabschnitt mit einer einstückig mit dem Dachmodul ausgeführten Wasserrinne (32) versehen ist, daß es eine Außenhaut (20) aufweist, die durchgehend durch die Wasserrinne (32) verläuft, und daß es eine geschäumte Verstärkungsschicht (22) unter der Außenhaut (20) aufweist.

2. Dachmodul nach Anspruch 1, **dadurch gekennzeichnet, daß** die Außenhaut (20) eine tiefgezogene Außenhaut (20) aus Metall ist.

3. Dachmodul nach Anspruch 1, **dadurch gekennzeichnet, daß** die Außenhaut (20) eine geformte Außenhaut (20) aus Kunststoff ist.

4. Dachmodul nach einem der vorhergehenden Ansprüche, **dadurch gekennzeichnet, daß** es aus mehreren Modulteilen (12, 14) besteht, von denen mindestens eines mit der Wasserrinne (32) versehen ist.

5. Dachmodul nach Anspruch 4, **dadurch gekennzeichnet, daß** die Modulteile durch mindestens eine Strebe (16) miteinander verbunden sind und daß an der Strebe ein Wasserkanal (33) vorgesehen ist, der mit der Wasserrinne (32) des Modulteils (12, 14) verbunden ist.

6. Dachmodul nach einem der Ansprüche 1 bis 3, **dadurch gekennzeichnet, daß** die Wasserrinne eine umlaufende, vollständig im Dachmodul angeordnete Wasserrinne (32) ist.

7. Dachmodul nach einem der vorhergehenden Ansprüche, **dadurch gekennzeichnet, daß** es einen einstückig ausgebildeten Spoiler (40) aufweist, der an die Wasserrinne (32) angrenzt.

## Claims

1. A roof module (10) provided to be placed on a body shell of a vehicle and to be connected thereto, comprising a rim portion (26) which delimits the roof module from an opening for a sliding roof cover (18), for example, **characterized in that** the rim portion is provided with a water groove (32) configured in one piece with the roof module, that the roof module has an outer skin (20) which extends continuously through the water groove (32), and that it has a foamed reinforcement layer (22) under the outer skin (20).

2. The roof module according to claim 1, **characterized in that** the outer skin (20) is a deep-drawn outer skin (20) made of metal.

3. The roof module according to claim 1, **characterized in that** the outer skin (20) is a molded outer skin (20) made of a synthetic material.

4. The roof module according to any of the preceding claims, **characterized in that** it is comprised of several module parts (12, 14), at least one of which is provided with the water groove (32).

5. The roof module according to claim 4, **characterized in that** the module parts are connected with each other by means of at least one strut (16) and that provided on the strut is a water channel (33) which is connected with the water groove (32) of the module part (12, 14).

6. The roof module according to any of claims 1 to 3, **characterized in that** the water groove is a surrounding water groove (32) completely arranged within the roof module.

7. The roof module according to any of the preceding claims, **characterized in that** it has an integrally formed spoiler (40) adjacent to the water groove (32).

## Revendications

1. Module de toit (10), prévu pour être rapporté et lié à une caisse de carrosserie de véhicule, avec une partie de bord (26), délimitant le module de toit par rapport à une ouverture, par exemple pour une couverture (18) d'un toit coulissant, **caractérisé en ce que** la partie de bord est prévue avec une gouttière (32) à eau formée monobloc avec le module de toit, **en ce que** le module de toit présente un revêtement extérieur (20) qui s'étend à travers la gouttière (32) à eau, et **en ce qu'**il présente une couche de renforcement (22) en mousse sous le revêtement extérieur (20).

2. Module de toit selon la revendication 1, **caractérisé en ce que** le revêtement extérieur (20) est un revêtement extérieur (20) d'emboutissage en profondeur de métal.

3. Module de toit selon la revendication 1, **caractérisé en ce que** le revêtement extérieur (20) est un revêtement extérieur (20) conformé en matière synthétique.

4. Module de toit selon l'une des revendications précédentes, **caractérisé en ce qu'**il comprend plusieurs parties (12, 14) de module, dont au moins une est prévue avec la gouttière (32) à eau.

5. Module de toit selon la revendication 4, **caractérisé en ce que** les parties de module sont reliées par au moins une entretoise (16) et un canal (33) d'eau est prévu au niveau de l'entretoise, relié avec la gouttière (32) à eau de la partie (12, 14) de module.

6. Module de toit selon l'une des revendications 1 à 3, **caractérisé en ce que** la gouttière à eau est une gouttière à eau entourante (32), entièrement disposée dans le module de toit.

7. Module de toit selon l'une des revendications précédentes, **caractérisé en ce qu'**il présente un becquet (40) formé monobloc en bordure de la gouttière à eau (32).
